# EUROPEAN PATENT SPECIFICATION

(11) **EP 1 242 508 B1**
(45) Date of publication and mention of the grant of the patent: **15.12.2004**
(21) Application number: 00989507.9
(22) Date of filing: 27.12.2000
(51) Int. Cl.: C08G 75/16

(54) **METHOD TO DECREASE CORROSIVENESS OF REACTANTS IN POLY(ARYLENE SULFIDE) POLYMER PRODUCTION**
VERFAHREN ZUR REDUKTION DER KORROSITÄT VON REAKTANDEN IN DER POLYARYLENSULFIDPOLYMERPRODUKTION
PROCEDE PERMETTANT DE REDUIRE LA CORROSIVITE DES REACTIFS DANS LA PRODUCTION D'UN POLYMERE DE POLY(SULFURE D'ARYLENE)

(30) Priority: 30.12.1999 US 476249
(43) Date of publication of application: 25.09.2002
(73) Proprietor: ConocoPhillips Company, Bartlesville, OK 74004 (US)
(72) Inventor: VIDAURRI, Fernando, C., Jr., Bartlesville, OK 74006 (US); FODOR, Jeffrey, S., Borger, TX 79007 (US); GEIBEL, Jon, F., Bartlesville, OK 74003 (US)
(74) Representative: Ebner von Eschenbach, Jennifer
(86) International application number: PCT/US2000/035365
(87) International publication number: WO 2001/049706

(56) References cited:
- US-A- 3 867 356
- US-A- 5 023 315
- US-A- 5 093 469

## Description

This invention relates to poly(arylene sulfide), (PAS) polymers. In one aspect this invention relates to a process for the preparation of poly(arylene sulfide) polymers wherein a portion of the polymerization reactants are pre-reacted in a two step process prior to being contacted with remaining polymerization reactants under polymerization conditions.

In one embodiment of this invention, polymerization reactants comprising an aqueous alkali metal hydroxide and a polar organic compound are pre-reacted at a first temperature to form a mixture, then the mixture is reacted with a sulfur source at a second temperature under conditions sufficient to remove at least a portion of the water that is contained in the mixture, thereafter the thus dehydrated mixture is contacted with at least one dihaloaromatic compound under polymerization conditions.

### BACKGROUND OF THE INVENTION

Poly(arylene sulfide) polymers are generally known in the art and have been found useful due to their high chemical and thermal resistance. Processes for the preparation of such poly(arylene sulfide) polymers have been disclosed in the art. In a typical preparation, at least one dihaloaromatic compound, a sulfur source, and a polar organic compound are contacted under polymerization conditions. Often a hydrous sulfur source is selected, or the reaction of the sulfur source with the polar organic compound generates water or liberates water of hydration. Such water can be detrimental to the formation of high molecular weight polymer, and thus it is often removed by dehydrating a pre-polymerization mixture of the sulfur source and polar organic compound. Such processes are typically conducted at relatively high temperatures under pressure in order to maximize the amount of water removed. This process has disadvantages in that the mixture of the sulfur source and polar organic compound is very corrosive and the dehydration vessel must be replaced or repaired more frequently than would be desirable, or the dehydration vessel must be made of expensive materials of construction that are less susceptible to corrosion. It would be economically desirable to have a process whereby the aqueous mixture of the sulfur source and polar organic compound to be dehydrated could be rendered less corrosive.

### OBJECTS OF THE INVENTION

It is desirable to provide a process for preparing a poly(arylene sulfide) polymer in which the dehydration of the aqueous sulfur source is conducted in a two-step process to render the dehydration mixture less corrosive.

### SUMMARY OF THE INVENTION

In accordance with this invention, polymerization reactants comprising an aqueous alkali metal hydroxide and a polar organic compound are pre-reacted at a first temperature to form a mixture, then the mixture is reacted with a sulfur source at a second temperature under conditions sufficient to remove at least a portion of the water that is contained in the mixture, thereafter the thus dehydrated mixture is contacted with at least one dihaloaromatic compound under polymerization conditions.

### DETAILED DESCRIPTION OF THE INVENTION

The poly(arylene sulfide) polymer is prepared according to this invention by pre-reacting reactants comprising an aqueous alkali metal hydroxide and a polar organic compound at a first temperature to form a mixture, then reacting the mixture with a sulfur source at a second temperature under conditions sufficient to remove at least a portion of the water that is contained in the mixture, thereafter contacting the thus dehydrated mixture with at least one dihaloaromatic compound under polymerization conditions.

Any suitable sulfur source can be employed in the process of this invention. Suitable sulfur sources are disclosed in U.S. 3,919,177, which is hereby incorporated by reference. Such suitable sulfur sources include, but are not limited to thiosulfates, thioureas, thioamides, elemental sulfur, thiocarbamates, metal disulfides and oxysulfides, thiocarbonates, organic mercaptans, organic mercaptides, organic sulfides, alkali metal sulfides and bisulfides and hydrogen sulfide.

The alkali metal sulfide which can be employed in the production of poly(arylene-sulfide) polymers can be used as a hydrate or as an aqueous mixture. Alkali metal sulfides useful in this invention include lithium sulfide, sodium sulfide, potassium sulfide, rubidium sulfide, cesium sulfide, and mixtures thereof. The aqueous solution of the alkali metal sulfide can be prepared according to this invention by the reaction of an alkali metal hydroxide with an alkali metal bisulfide in aqueous solution. It is generally preferred to use sodium sulfide or a combination of sodium bisulfide and sodium hydroxide as the sulfur source in the preparation of poly(arylene sulfide) polymers due to cost and effectiveness. In this invention which gre-reacts the alkali metal hydroxide and polar organic compound, it is preferred to use an alkali metal bisulfide as the sulfur source.

The polar organic compounds useful in the present invention are solvents for the dihaloaromatic compounds and the sulfur source used in the production of poly(arylene sulfide) polymers. Examples of such polar organic compounds include amides, including lactams, and sulfones. Specific examples of such polar organic compounds include hexamethylphosphoramide, tetramethylurea, N,N-ethylenedipyrrolidone, N-methyl-2-pyrrolidone (NMP), pyrrolidone, caprolactam, N-ethylcaprolactam; sulfolane, N,N'-dimethylacetamide,1,3-dimethyl 2-imidazolidinone, low molecular weight polyamides, and the like. The polar organic compound presently preferred is NMP.

The hydrous or aqueous sulfur source and polar organic compound are pre-reacted (dehydrated) under conditions sufficient to remove at least a portion of the water prior to addition of the dihaloaromatic compound and commencement of the polymerization.

It has been found that the corrosiveness of the mixture to be dehydrated can advantageously and surprisingly be reduced by performing the pre-reaction in a two-step process. First, the aqueous alkali metal hydroxide is contacted with the polar organic compound at a first temperature, then the mixture is contacted with the alkali metal bisulfide at a second higher temperature and subjected to conditions sufficient to remove at least a portion, if not all, of the water prior to contacting the mixture with the remaining components of the reaction mixture. In another embodiment of the invention, the reaction product of the alkali metal hydroxide and polar organic compound is subjected to a higher temperature under conditions sufficient to remove a portion of the water prior to contacting the mixture with the alkali metal bisulfide.

The aqueous alkali metal hydroxide is contacted with the polar organic compound for a time sufficient to allow reaction of the two components and the formation of an alkali metal aminoalkanoate in an aqueous solution. The reaction product of the alkali metal hydroxide and polar organic compound is far less corrosive and further has the advantage of being soluble in the polymerization reaction mixture. In an especially preferred embodiment of this invention, sodium hydroxide and N-methyl-2-pyrrolidone are reacted to form N-methyl-4-aminobutanoate (SMAB).

The temperature at which the first step of contacting takes place can vary widely, but is generally between about 50 and about 200°C. It is preferred to employ a temperature that is just above that necessary to cause the reactants to remain in solution since the corrosivity of the solution increases with increases in temperature. It is most preferred to employ a temperature in the range of about 75 to about 125°C.

After the reaction of the alkali metal hydroxide and polar organic compound has taken place, the temperature is increased to a second temperature sufficient to effect dehydration of, or to further dehydrate, the mixture. If the alkali metal bisulfide that is to be employed is an aqueous sulfur source, it can be added prior to the dehydration and the dehydration can be effectively conducted to remove that water added with the sulfur source as well. Alternatively, separate dehydrations can be conducted after each addition of an aqueous reactant

The dehydration can be conducted according to any method known to those of ordinary skill in the art. Suitable methods are disclosed in US 4,368,321 and U.S. 4,371,671, both of which are hereby incorporated by reference. The temperature at which the dehydration is conducted will generally range from about 100 to about 240°C; the pressure will typically range from slightly above atmospheric pressure up to 308 kPa (30 psig).

Generally, the remaining components of the reaction mixture can be contacted with each other in any order.

Dihaloaromatic compounds which can be employed in the process of this invention can be represented by the formula 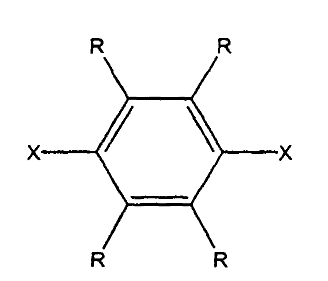 where each X is selected from the group consisting of chlorine, bromine, and iodine, and each R is selected from the group consisting of hydrogen and hydrocarbyl in which the hydrocarbyl can be an alkyl, cycloalkyl, or aryl radical or combination thereof such as alkaryl, aralkyl, or the like, the total number of carbon atoms in each molecule being within the range of 6 to about 24. While the halogen atoms can be in any position in the dihaloaromatic compound, it is preferred to employ p-dihalobenzenes as the dihaloaromatic compound.

Examples of suitable p-dihalobenzenes include p-dichlorobenzene (DCB), p-dibromobenzene, p-diiodobenzene, 1-chloro-4-bromobenzene, 1-chloro-4-iodobenzene, 1-bromo-4-iodobenzene, 2,5-dichlorotoluene. 2,5-dichloro-p-xylene, 1-ethyl-4-isopropyl-2,5-dibromobenzene, 1,2,4,5-tetramethyl-3,6-dichlorobenzene, 1-butyl-4-cyclohexyl-2,5-dibromo- benzene, 1-hexyl-3-dodecyl-2,5-dichlorobenzene, 1-octadecyl-2,5-diiodobenzene, 1-phenyl-2-chloro-5-bromobenzene, 1-(p-tolyl)-2,5-dibromobenzene, 1-benzyl-2,5-dichlorobenzene, 1-octyl-4-(3-methylcyclopentyl)-2,5-dichloro-benzene and the like, and mixtures of any two or more thereof. The preferred dihaloaromatic compound for use in this invention is p-dichlorobenzene (DCB) due to availability and effectiveness.

It is within the scope of this invention to employ other components in the polymerization reaction mixture or during the polymerization. For example, molecular weight modifying or enhancing agents such as alkali metal carboxylates, lithium halides, or water can be added or produced during polymerization. Suitable alkali metal carboxylates which can be employed include those having the formula R'COOM where R' is a hydrocarbyl radical selected from alkyl, cycloalkyl, aryl, alkylaryl, arylalkyl, and the number of carbon atoms in R' is in the range of 1 to about 20, and M is an alkali metal selected from lithium, sodium, potassium, rubidium and cesium. The alkali metal carboxylate can be employed as a hydrate or as a solution or dispersion in water. The preferred alkali metal carboxylate is sodium acetate due to availability and effectiveness.

Poly(arylene sulfide) polymerizations are generally disclosed in the art. For example, U.S. 3,354,129, which is hereby incorporated by reference, U.S. 3,919,177, and U.S. 4,645,826 all disclose methods of preparing poly(arylene sulfide) polymers. The above-cited patent publications also disclose methods for recovering a useful poly(arylene sulfide) polymer product. Another suitable method of recovering poly(arylene sulfide) polymer products is disclosed in U.S. 4,415,729, which is hereby incorporated by reference. These patent publications all describe the separation of a desired polymer product from reaction mixtures containing various impurities and unreacted polymerization components.

The poly(arylene sulfide) polymer prepared by the invention method can be either high or low molecular weight polymer. When describing the polymer prepared by the invention method, the term low molecular weight poly(arylene sulfide) polymer is generally meant to denote a poly(arylene sulfide) polymer having a melt flow value in the range of greater than 1000 g/10 min. to about 30,000 g/10 min. when measured according to ASTM D 1238, Condition 316/5.

The term high molecular weight poly(arylene sulfide) polymer, as used herein, is generally meant to denote an essentially linear poly(arylene sulfide) polymer having a melt flow value less than about 1000 g/10 min when in an uncured state. Essentially linear poly(arylene sulfide), as used herein, is defined as a polymer having no branching or such a small amount of branching as to have substantially no effect on the polymer properties. For example, the amount of polyhaloaromatic impurity found in the dihaloaromatic used in the poly(arylene sulfide) polymerization process would not be sufficient to cause the resultant poly(arylene sulfide) to be outside the essentially linear definition.

Generally, the ratio of reactants employed in the polymerization process can vary widely. It is preferred that the molar ratio of the amount of dibaloaromatic compound to amount of sulfur source be in the range of about 0.8/1, to about 2/1. If an alkali metal carboxylate is employed as a molecular weight modifying agent, it is preferred that the molar ratio of alkali metal carboxylate to dihaloaromatic compound be within the range of about 0.05/1 to about 4/1.

The amount of polar organic compound employed can vary during the polymerization over a wide range. Preferably, however, during polymerization the molar ratio of the amount of polar organic compound to the amount of sulfur source is in the amount of 1/1 to 10/1.

The term commencement of the polymerization as used herein is defined as that point at which the polymerization reaction mixture is first subjected to polymerization conditions sufficient to initiate polymerization. The term termination of polymerization, as used herein, is defined as that point at which an affirmative step is taken to effect a removal of the conditions necessary for polymerization to effectively continue, for example, by beginning the recovery of the poly(arylene sulfide) polymer from the polymerization mixture. It must be noted that use of the term termination of the polymerization does not imply that complete reaction of the polymerization reaction components has occurred. It should also be noted that, as used herein, the term termination of the polymerization is not meant to imply that no further polymerization of the reactants can take place. Generally, for economic reasons, poly(arylene sulfide) polymer recovery is typically begun at a time when polymerization is substantially completed, that is, the increase in polymer molecular weight which would result from further polymerization is not significant enough to warrant the additional polymerization time.

Although the reaction temperature at which the polymerization is conducted can vary over a wide range, generally it will be within the range of about 170°C (347°F) to about 325°C (617°F), preferably about 200°C to about 290°C. The reaction time can vary widely, depending in part on the reaction temperature, but generally will be within the range of about 10 minutes to about 72 hours, preferably about 1 hour to about 8 hours. The pressure should be sufficient to maintain the polar organic compound and the dihaloaromatic compound substantially in the liquid phase.

The poly(arylene sulfide) polymer prepared according to this invention can be recovered by any method known to those of ordinary skill in the art.

The following examples are provided in order to further illustrate the invention, but are not intended to be limiting of the scope thereof.

### EXAMPLES

In the following examples, the polymer extrusion rates, reported as grams per 10 minutes (g/10 min), were determined by the method of ASTM D 1238, Condition 316/0.345. The orifice used for measuring the extrusion rate had a 2.096 +/-0.005 mm diameter and a 31.75 +/- 0.05 mm length. Polymer melt flow values, in units of g/10 min, were determined by the method of ASTM D 1238, Condition 316/5. The orifice used for measuring the melt flow had a 2.096 +/- 0.005 mm diameter and a 8.000 +/- 0.025 mm length.

The relative amounts of volatiles present in the polymer samples were measured using a quartz crystal microbalance (QCM). This test involved vaporizing volatile materials from a molten PPS sample, collecting the vapors on a water cooled, vibrating quartz crystal, and ranking the amount of condensed material by changes in the frequency of the vibrating crystal. A weighed sample of the PPS polymer was placed in the bottom of a heated (325 °C) stainless steel beaker that was covered with a lid containing the vibrating crystal. As the vapors condensed on the crystal, the resonance frequency of the crystal decreased in proportion to the amount deposited. Test values are reported in terms of a dimensionless relative number proportional to the change in frequency of the crystal in a 10 minute test time. Lower reported values indicate that the test sample had a lower level of volatiles at the test temperature than the samples with higher QCM values.

Analysis of polymers for unreacted dichlorobenzene in the crude reaction mixture was performed by gas chromatography (GC) of DCB/NMP mixtures using an HP 5890 gas chromatograph controlled by an HP 3365 Series II ChemStation (DOS Series). The carrier gas used was helium. Standard solutions were used to determine response factors. Injections of solutions to be analyzed were made using a 0.5 microliter syringe, typically using a 0.05-0.4 microliter injection. The column used with the gas chromatograph was a 30 meter 0.53 mm capillary column (DB Wax), purchased from J&W Scientific (Cat. No. 125-7032). The temperature program for DCB/NMP analysis first employed a hold at 120°C for 2 minutes, then temperature was ramped at 30°C/minute up to 190°C and held there for 1.30 minutes. Total analysis time was approximately 5.63 minutes. Typical mixtures ranged from about 0.1 weight percent *p*-dichlorobenzene in NMP up to about 4 weight percent *p*-dichlorobenzene in NMP. The GC standard used for comparison purposes was a mixture that was 1.5 weight percent p-dichlorobenzene in NMP and whose compositions was known accurately. The standard solutions were diluted with isopropanol in order to fall within the desired concentration range. Experimental samples of a crude PPS reaction mixture from the reactor were blended with about a 10-fold amount of isopropanol in a Waring blender. Filtration of the sample yielded a clear liquid containing isopropanol, NMP and unreacted *p*-dichlorobenzene.

Metals analysis was performed by inductively coupled plasma/mass spectroscopy on aqeuous nitric acid digests of the ash remaining from pyrolysis of samples of the polymers. The metals concentrations are reported in parts per million (ppm).

### Example I

This example (Polymerization Run I-1) describes the general preparation of a poly(p-phenylene sulfide) polymer, (PPS), according to generally known methods. In this typical PPS preparation, to a one-liter stirred stainless steel reactor were added 40.97 grams sodium hydroxide (NaOH) pellets of 98.6 % purity (1.01 g-mol NaOH) and 40.0 g double distilled water (2.22 g-mol), 95.49 g aqueous sodium bisulfide (NaSH) (58.707 % NaSH by weight) (1.00 g-mol), and 198.26 g of N-methyl-2-pyrrolidone (NMP) (2.00 g-mol). The reactor was degassed with 5 pressure release cycles of 446 kPa (50 psig) nitrogen and 5 cycles of 1479 kPa (200 psig) nitrogen. The reactor and contents were then heated slowly to 100°C, whereupon the dehydration outlet was opened and nitrogen flow at the rate of 32 mL/min. was begun. The dehydration was continued while heating to a final temperature of about 204°C. Then the dehydration outlet was closed and 148.49 g p-dichlorobenzene (DCB) (1.0 g-mol) dissolved in 1.00 g-mol NMP was charged to the reactor using a charge cylinder. The charge cylinder was rinsed with an additional 1 g-mol of NMP which was also added to the reactor. The reactor was degassed again in the same manner as described above. The reactor was then heated to polymerization conditions (235 °C) for 2 hours, then the temperature was increased to 260°C for 2 hrs to produce PPS. At the conclusion of the polymerization, the reactor was cooled to room temperature and the mixture of PPS polymer and NMP was extracted using isopropanol.

The PPS in NMP/isopropanol was analyzed by gas chromatography to obtain a wt% DCB. The reactor product was then washed with water six times at 90°C and filtered on a coarse filter paper to recover the PPS product which was left to dry overnight under a hood. The following day, the PPS product was placed in a vacuum oven and dried at 100°C for 24 hours to yield 101.23 g of dried PPS polymer product. The extrusion rate of the PPS product was measured as described above and found to be 72.71 g/10 min.

### Example II

This example describes the effect of employing the invention method of pre-contacting the sodium hydroxide and NMP and dehydrating prior to adding the sodium bisulfide. For polymerization Run II-1, the reactor was charged with 40.97 grams sodium hydroxide (NaOH) pellets of 98.6 % purity (1.01 g-mol NaOH), 79.43 g double distilled water (4.41 g-mol) and 198.26 g of N-methyl-2-pyrrolidone (NMP) (2.00 g-mol). The reactor was degassed with 5 pressure release cycles of 446 kPa (50 psig) nitrogen and 5 cycles of 1479 kPa (200 psig) nitrogen. After the reactor had been degassed with nitrogen, the contents were heated to 100°C and held at that temperature for a period of 1 hour. Thereafter, the dehydration outlet was opened and dehydration was carried out while increasing the temperature to about 204°C. Then, the dehydration outlet was closed and the reactor contents cooled to room temperature.

Following this first dehydration, 95.49 g aqueous sodium bisulfide (NaSH) (58.707 % NaSH by weight) (1.00 g-mol) was added to the reactor which was degassed again as described above, except that 377 kPa (40 psig) of nitrogen was left in the reactor overnight. The next day the pressure was released and the reactor was heated to 105 °C after which the dehydration outlet was opened. The reactor was further heated to about 204 ° C and then the outlet was closed. Thereafter, 1.01 g-mol of DCB (148.49 g) and 1.00 g-mol NMP were added to the dehydrated mixture and the reactor was heated to 235 °C and held for one hour. The reactor was then heated to 265°C and held for two hours. Then, the reactor was cooled and opened. A sample of the liquid in the reactor was removed. The PPS product was mixed with isopropanol, then filtered and washed with distilled water 6 times at a temperature of 90°C, then filtered to recover a polymer product. Approximately 102.08 g of PPS with an extrusion rate of 62.64 g/10 min was obtained after drying.

Run II-2 (38218-98) was carried out using the procedure described for Run II-1, except that the amount of water added in the first charge was approximately 2.22 g-mol instead of 4.41 g-mol and that 95.30 g of NaSH was added in the second charge to the reactor.

A comparison of the products from Example I and Example II, Runs 1 and 2 is shown in Table I hereinbelow. The polymers produced by the invention method have comparable extrusion rates to that produced by known methods; however, the polymers produced by the invention method exhibit far lower levels of metals contamination, especially with respect to Chromium, Iron, and Nickel which are materials of construction of the reaction vessel. The lower levels of metals found in the final polymer product are an indication of less corrosivity in the reactor.

### Example III

Two additional PPS polymerization Runs III-1 and III-2 was carried out in the manner described in Example II, Run II-2 to further demonstrate the invention effect of pre-contacting the alkali metal hydroxide with the polar organic compound prior to adding the sulfur source.

Polymerization Run III-3 was performed in the manner set forth in Example I to provide an additional comparison employing known methods of polymerization.

The runs from this example are summarized in Table I. The use of the invention method of pre-contacting the alkali metal hydroxide with the polar organic compound at relatively lower temperatures, then adding the sulfur source and conducting a dehydration results in greatly decreased corrosiveness of the dehydration mixture, as evidenced by the much lower levels of metal contamination in the resultant polymer, compared with control Runs I-1 and III-3, with essentially the same extrusion rates.

**Table I**

| Ex. Run No. | No. of dehydration Steps | Isopropanol extractables wt% DCB | Yield of PPS (g) | Extrusion Rate (g/10min.) | 10 min. QCM | Na (ppm) | Cr (ppm) | Fe (ppm) | Ni (ppm) |
|---|---|---|---|---|---|---|---|---|---|
| I-1 | 1 | 1.1730 | 101.23 | 72.71 | 0.28 | 489 | 108 | 492 | 41.1 |
| II-1 | 2 | 1.070 | 102.08 | 62.64 | 0.278 | 443 | 6.8 | 39.3 | 8.9 |
| II-2 | 2 | 1.2150 | 100.75 | 35.61 | 0.275 | 367 | 14.5 | 55.2 | 9.1 |
| III-1 | 2 | 0.8930 | 101.46 | 37.54 | 0.351 | 379 | 11.2 | 45.6 | 14.5 |
| III-2 | 2 | 0.9905 | 101.45 | 48.5 | 0.345 | 409 | 11.1 | 37.2 | 9.3 |
| III-3 | 1 | 0.9520 | 100.48 | 56.04 | 0.328 | 375 | 132 | 558 | 52.4 |

While this invention has been described in detail for the purpose of illustration, it is not meant to be limited thereby, but is intended to cover all reasonable modifications within the scope thereof.

## Claims

1. A method for preparing poly(arylene sulfide) polymer, comprising:
reacting an aqueous alkali metal hydroxide with a polar organic compound within a metal vessel comprising one or more of iron, chromium and nickel and within a first temperature range not higher than 200°C to form a solution having a reaction product of the metal hydroxide and the polar organic compound;
dehydrating the solution such that at least a portion of the water is removed from the solution;
adding a sulfur source to the solution to form a mixture;
dehydrating the mixture at a temperature of 100°C or greater such that at least a portion of the water is removed from the mixture; and .
adding one or more polymerization reactants, comprising at least one dihaloaromatic compound, to the mixture under polymerization conditions to form poly(arylene sulfide) polymers, wherein the corrosiveness of at least one of the solution and the mixture to the metal vessel is reduced.

2. A method according to claim 1, wherein said alkali metal hydroxide comprises sodium hydroxide.

3. A method according to any preceding claim wherein said polar organic compound comprises N-methyl-2-pyrrolidone.

4. A method according to any preceding claim wherein said sulfur source comprises an alkali metal bisulfide, preferably sodium bisulfide.

5. A method according to any preceding claim wherein said first temperature range is 50 to 200°C.

6. A method according to claim 5, wherein the range is 75 to 125°C.

7. A method according to any preceding claim wherein the reaction product comprises N-methyl-4-aminobutanoate.

8. A method according to any preceding claim wherein dehydrating the mixture occurs at 240°C or less.

## Patentansprüche

1. Verfahren zum Herstellen von Polyarylensulfid-Polymer, umfassend:
Umsetzen eines wässrigen Alkalimetallhydroxids mit einer polaren organischen Verbindung in einem Metallkessel, aufweisend ein oder mehrere von Eisen, Chrom und Nickel, innerhalb eines ersten Temperaturbereichs von nicht höher als 200°C, um eine Lösung zu erzeugen, die ein Reaktionsprodukt des Metallhydroxids und der polaren organischen Verbindung aufweist;
Wasserentziehen der Lösung, so dass mindesten ein Teil des Wassers aus der Lösung entfernt wird;
Zusetzen eines Schwefel-Ausgangsstoffes zu der Lösung, um eine Mischung zu erzeugen;
Wasserentziehen der Mischung bei einer Temperatur von 100°C oder höher, so dass mindesten ein Teil des Wassers aus der Mischung entfernt wird; und
Zusetzen von einem oder mehreren Polymerisationsreaktanden, die mindestens eine dihalogenaromatische Verbindung aufweist/aufweisen, zu der Mischung unter Polymerisationsbedingungen, um Polyarylensulfid-Polymer zu erzeugen, wobei die Korrosivität mindestens von einem der Lösung und der Mischung gegenüber dem Metallkessel herabgesetzt ist.

2. Verfahren nach Anspruch 1, bei welchem das Alkalimetallhydroxid Natriumhydroxid aufweist.

3. Verfahren nach einem der vorgenannten Ansprüche, bei welchem die polare organische Verbindung M-Methl-2-pyrrollidon umfasst.

4. Verfahren nach einem der vorgenannten Ansprüche, bei weichem der Schwefel-Ausgangsstoff, der ein Alkalimetallhydrogensulfid aufweist, bevorzugt Natriumhydrogensulfid.

5. Verfahren nach einem der vorgenannten Ansprüche, bei welchem der erste Temperaturbereich 50° bis 200°C beträgt.

6. Verfahren nach Anspruch 5, bei welchem der Bereich 75° bis 125°C beträgt.

7. Verfahren nach einem der vorgenannten Ansprüche, bei welchem das Reaktionsprodukt N-Methyl-4-aminobutanoat umfasst.

8. Verfahren nach einem der vorgenannten Ansprüche, bei welchem das Wasserentziehen der Mischung bei einer Temperatur bei 240°C oder weniger erfolgt.

## Revendications

1. Procédé pour préparer un polymère poly(sulfure d'arylène) comprenant :
la réaction d'un hydroxyde de métal alcalin aqueux avec un composé organique polaire dans un récipient métallique comprenant une ou plusieurs substances parmi le fer, le chrome et le nickel et dans une première plage de température qui n'est pas supérieure à 200°C pour former une solution ayant un produit réactionnel de l'hydroxyde métallique et du composé organique polaire ;
la déshydratation de la solution de telle manière qu'au moins une partie de l'eau est retirée de la solution ;
l'addition d'une source de soufre à la solution pour former un mélange ;
la déshydratation du mélange à une température supérieure ou égale à 100°C de telle manière qu'au moins une partie de l'eau est retirée du mélange ; et
l'addition d'un ou plusieurs réactifs de polymérisation comprenant au moins un composé dihalogénoaromatique, au mélange dans des conditions de polymérisation pour former des polymères poly(sulfure d'arylène), où la corrosivité d'au moins un élément parmi la solution et le mélange à l'égard du récipient métallique est réduite.

2. Procédé selon la revendication 1 où ledit hydroxyde de métal alcalin comprend de l'hydroxyde de sodium.

3. Procédé selon l'une quelconque des revendications précédentes où ledit composé organique polaire comprend de la N-méthyl-2-pyrrolidone.

4. Procédé selon l'une quelconque des revendications précédentes où ladite source de soufre comprend un disulfure de métal alcalin, de préférence le disulfure de sodium.

5. Procédé selon l'une quelconque des revendications précédentes où ladite première plage de température est 50 à 200°C.

6. Procédé selon la revendication 5 où la plage est 75 à 125°C.

7. Procédé selon l'une quelconque des revendications précédentes où le produit réactionnel comprend du N-méthyl-4-aminobutanoate.

8. Procédé selon l'une quelconque des revendications précédentes où la déshydratation du mélange a lieu à 240°C ou moins.
